# EUROPÄISCHE PATENTSCHRIFT

(11) **EP 2 116 461 B1**
(45) Veröffentlichungstag und Bekanntmachung des Hinweises auf die Patenterteilung: **20.03.2013**
(21) Anmeldenummer: 08103913.3
(22) Anmeldetag: 09.05.2008
(51) Int. Cl.: B62D 33/04, B62D 29/04, B62D 27/02

(54) **Kofferaufbau für ein Fahrzeug, wie einen Lastkraftwagen, Anhänger oder Sattelauflieger**
Box body for a vehicle such as a lorry trailer, trailer or semi trailer
Structure de coffre pour un véhicule, comme un poids lourd, une remorque ou un train routier

(43) Veröffentlichungstag der Anmeldung: 11.11.2009
(73) Patentinhaber: Schmitz Cargobull AG, 48341 Altenberge (DE)
(72) Erfinder: Dipl.-Ing. Schmitz Peter, 48341 Altenberge (DE); Hessling Alfons, 48683 Ahaus (DE); Dipl.-Ing. Beelmann Reinhard, 45721 Haltern am See (DE)
(74) Vertreter: Cohausz & Florack

(56) Entgegenhaltungen:
- DE-U1- 9 014 345
- FR-A- 2 845 062
- US-A- 4 531 278

## Beschreibung

Die Erfindung betrifft einen Kofferaufbau für ein Fahrzeug, wie einen Lastkraftwagen, Anhänger oder Sattelauflieger, der aus einem Bodenelement, Seitenwandelementen, von denen ein Seitenwandelement an der einen und das andere Seitenwandelement an der anderen Längsseite des Bodenelements angeordnet ist, und einem Dachelement zusammengesetzt ist.

Solche Kofferaufbauten werden insbesondere für Kühlfahrzeuge verwendet, mit denen verderbliche Ware transportiert wird. Die Wand-, Dach- und Bodenelemente des Kofferaufbaus sind daher üblicherweise als Sandwichkonstruktion aufgebaut, die aus zwei Außenlagen aus Stahlblech und einer zwischen die Außenlagen gefüllten Schaumfüllung bestehen. Die metallischen Außenlagen schützen dabei die Schaumfüllung gegen Beschädigungen, während die Schaumfüllung die Wärmeisolation und ausreichende Festigkeit des Sandwichverbundes gewährleistet.

Unabhängig vom jeweiligen Verwendungszweck wird von Kofferaufbauten der in Rede stehenden Art gefordert, dass sie ein geringes Gewicht besitzen und kostengünstig hergestellt werden können. Daher ist man bestrebt, die Einzelelemente eines solchen Kofferaufbaus so einfach wie möglich miteinander zu verbinden. Gleichzeitig sollen die Kofferaufbauten eine so hohe Formstabilität besitzen, dass sie auch unter ungünstigen Betriebsbedingen die jeweils transportierte Last sicher schützen.

Eine Möglichkeit, zwei rechtwinklig aufeinander stoßenden Wandelemente eines Kofferaufbaus miteinander auf einfache Weise zu verbinden, ist in der DE 101 03 077 B4 beschrieben. Gemäß der in dieser Patentschrift beschriebenen Lösung sind die beiden aufeinander stoßenden Wandelemente im Bereich ihrer Wandkanten über eine außen liegende Falzverbindung miteinander verbunden. Die Falzverbindung wird dabei bevorzugt durch Umbördeln eines von dem einen Wandelement abstehenden Anschlussblechs mit einem von dem anderen Wandelemente abstehenden Anschlussblech hergestellt.

Die miteinander verfalzten Anschlussbleche werden dazu als separate Bauteile vorgeformt und dann auf die Außenseite der vormontierten Wandelemente aufgeklebt. Anschließend werden die Anschlussbleche mit ihren einander zugeordneten Randabschnitten so verbördelt, dass eine feste formschlüssige Verbindung hergestellt ist. Durch in regelmäßigen Abständen gesetzte Verschweißungen wird die Falzverbindung zusätzlich gesichert.

Bei dem in der DE 101 03 077 B4 beschriebenen Ausführungsbeispiel liegt die Verfalzung der Wandelemente in einem seitlichen Randbereich des Bodenelements unterhalb der dort an das Bodenelement angeschlossenen Längswand. Durch eine Verkröpfung der frei über die Längswand und das Bodenelement vorstehenden Anschlussbleche ist dabei erreicht, dass die Falzstelle weder über die Unterseite des Bodenelements noch die Außenfläche der Längswand hinaussteht. Der Vorteil der in der DE 101 03 077 B4 beschriebenen Art und Weise der Verbindung von zwei Wandelementen eines Kofferaufbaus besteht darin, dass sie mit einfachen Werkzeugen hergestellt werden kann und dass keine zusätzlichen Befestigungselemente, wie Schrauben, Nieten oder Verbindungsprofile, benötigt werden, um die Wandelemente dauerhaft sicher aneinander zu befestigen. Allerdings setzt diese Vorgehensweise voraus, dass die miteinander zu verbindenden Wandelemente ergänzend zu der Falzverbindung jeweils noch durch eine Schweißverbindung gesichert werden. Darüber hinaus bleibt unklar, wie sich die in der DE 101 03 077 B4 beschriebene Vorgehensweise großtechnisch für den Zusammenbau eines Kofferaufbaus nutzen lässt.

Vor diesem Hintergrund lag der Erfindung die Aufgabe zu Grunde, einen Kofferaufbau für einen Fahrzeug zu schaffen, der sich mit minimiertem Fertigungsaufwand herstellen lässt.

Diese Aufgabe ist erfindungsgemäß durch den in Anspruch 1 angegebenen Kofferaufbau gelöst worden. Vorteilhafte Ausgestaltungen eines erfindungsgemäßen Kofferaufbaus sind in den auf Anspruch 1 rückbezogenen Ansprüchen angegeben.

Ein erfindungsgemäßer Kofferaufbau für ein Fahrzeug, wie einen Lastkraftwagen, Anhänger oder Sattelauflieger, ist in konventioneller Weise aus einem Bodenelement, Seitenwandelementen, von denen jeweils eines an einer der Längsseiten des Bodenelements und ein weiteres an der Stirnseite des Bodenelements angeordnet ist, und einem Dachelement zusammengesetzt, das von den Seitenwandelementen getragen wird.

Erfindungsgemäß ist nun mindestens zwischen den die Längsseitenwände des Kofferaufbaus bildenden Seitenwandelementen und dem Bodenelement jeweils eine Fügezone ausgebildet, in der das Bodenelement und das jeweilige Seitenwandelement aufeinander stoßen und durch eine auf der Außenseite des Kofferaufbaus angeordnete Falzverbindung miteinander verbunden sind. Genauso ist bei einem erfindungsgemäßen Kofferaufbau zwischen den den Längsseitenwänden zugeordneten Seitenwandelementen und dem Dachelement jeweils eine weitere Fügezone vorhanden, in der das Dachelement und das jeweilige Seitenwandelement aufeinanderstoßen und ebenfalls durch eine auf der Außenseite des Kofferaufbaus angeordnete Falzverbindung miteinander verbunden sind.

Über den aus der DE 101 03 077 B4 bekannten Stand der Technik hinausgehend sind bei einem erfindungsgemäßen Kofferaufbau also alle Verbindungen zwischen dem Dachelement und den Seitenwandelementen sowie zwischen dem Bodenelement und den Seitenwandelementen durch Falzverbindungen hergestellt.

Zusätzlich ist gemäß der Erfindung vorgesehen, dass der Kofferaufbau im Bereich der Fügezonen jeweils eine sich über die jeweilige Fügezone erstreckende Materialaussparung aufweist, so dass innerhalb der Umhüllenden des Kofferaubaus ein entlang des Dachelements verlaufender erster Raum, in dem die jeweilige Falzverbindung zwischen dem Dachelement und den Seitenwandelementen angeordnet ist, und ein entlang des Bodenelements verlaufender zweiter Raum gebildet sind, in dem die jeweilige Falzverbindung zwischen dem Bodenelement und den Längswandelementen bzw. dem Stirnwandelement angeordnet ist.

Bei einem erfindungsgemäßen Kofferaufbau ist somit sowohl im Verbindungsbereich zwischen dem Bodenelement und den Seitenwandelementen als auch bei der Verbindung zwischen dem Dachelement und den Seitenwandelementen innerhalb der Umhüllenden des Kofferaufbaus Raum geschaffen, in dem die jeweilige Falzverbindung angeordnet ist, ohne dass sie über die Außenflächen des Kofferaufbaus hinaussteht. Auf diese Weise kann die an sich bekannte Art und Weise einer Falzverbindung insbesondere in dem Bereich, in dem das Dachelement und Seitenwandelemente aufeinander stoßen, unter maximaler Ausnutzung der zulässigen Bauhöhe des Kofferaufbaus eingesetzt werden.

Die Falzverbindungen sind jeweils dabei aus zwei von den miteinander verbundenen Elementen abstehenden Anschlussblechen gebildet. Dies hat den Vorteil, dass für die Falzverbindung Blechmaterialien verwendet werden können, die optimal verformbar sind und als separate Formteile vorgefertigt auf die Außenseite der miteinander verbundenen Elemente aufgesetzt werden.

Um dabei einen möglichst glatten, sprungfreien Übergang zwischen den Außenflächen der Seitenwandelemente und den Anschlussblechen herzustellen, weisen mindestens die Seitenwandelemente in ihren den Fügezonen zugeordneten Randbereichen jeweils eine sich über die Fügezone erstreckende Einformung auf, in der die Anschlussbleche mit ihrem das jeweilige Seitenwandelement überdeckenden Bereich liegen. Durch diese Maßnahme ist es möglich, die Seitenwandelement in einem kostengünstigen Werkzeug zu fertigen, dessen mit der Außenwand des Seitenwandelements in Kontakt kommende Flächen lediglich eben geformt sein müssen.

Letzteres erweist sich insbesondere dann als besonders vorteilhaft, wenn die Seitenwandelemente als Sandwichkonstruktionen aufgebaut sind, die durch eine feste Außenlage, eine feste Innenlage und eine zwischen die Außenund die Innenlage gefüllte Schaumfüllung gebildet sind. Die für die Herstellung solcher Sandwichkonstruktionen benötigten Pressen können in Folge der erfindungsgemäßen Ausgestaltung der Seitenwandelemente besonders einfach und dementsprechend preisgünstig gestaltet werden. So können die mit dem Seitenwandelement in Kontakt kommenden Presstlächen durchgehend eben ausgebildet sein, da die Tiefe der Einformung, in denen das jeweilige Anschlussblech liegt, mindestens gleich der geringesten Dicke des in ihr liegenden Anschlussblechs ist. Auf diese Weise ist sichegestellt, dass die freie Oberfläche der Anschlussbleche jeweils weitestgehend flächenbündig zur Oberfläche der Seitenwandelemente ausgerichtet ist.

Mit der Erfindung steht folglich ein Kofferaufbau zur Verfügung, der sich auf eine gegenüber dem aus der DE 101 03 077 B4 beschriebenen Stand der Technik weiter vereinfachten Weise mit minimiertem Fertigungsaufwand herstellen lässt und dabei optimale Gebrauchseigenschaften bei maximaler Formstabilität besitzt.

Neben der Verbindung zwischen den Längsseiten und dem Dach sowie dem Bodenelement lässt sich in erfindungsgemäßer Weise auch das Seitenwandelement mit dem Dach- und dem Bodenelement verbinden, das die dem Zugfahrzeug zugewandte Stirnwand des Kofferaufbaus bildet. In diesem Fall werden die Füge- und die Falzzonen innerhalb der Umhüllenden des Kofferaufbaus so angeordnet, dass sich jeweils ein von der einen Längsseite zur anderen Längsseite um das Dachelement sowie das Bodenelement umlaufender Raum bildet, in dem die erfindungsgemäß genutzten Falzverbindungen hergestellt sind, ohne dass sie über eine der Seitenwände, das Dach oder den Boden des Kofferaufbaus hinausstehen.

In Übereinstimmung mit dem Stand der Technik werden erfindungsgemäße Kofferaufbauten typischerweise eine quaderförmige Grundform aufweisen, so dass auch die Umhüllende eines erfindungsgemäßen Kofferaufbaus einen Quader bildet. In den den Längswänden und der Stirnwand des erfindungsgemäßen Kofferaufbaus zugeordneten Kantenbereichen dieses Quaders sind in diesem Fall die erfindungsgemäß vorgesehenen Falzverbindungen positioniert.

Eine besonders stabile und praxisgerechte Ausführung der Erfindung ist **dadurch gekennzeichnet, dass** die Seitenwandelemente jeweils auf einem Randbereich des Bodenelements abgestützt sind und dass das Dachelement auf den Seitenwandelementen aufliegt. Diese Art der Seitenwände auf dem Bodenelement und des Dachelements auf den Seitenwandelementen ergibt in Kombination mit den auf der Außenseite des Kofferaufbaus angeordneten Verfalzungen eine besonders hohe Formstabilität, da die die Falzverbindungen keine Traglasten aufnehmen müssen, sondern lediglich sicherstellen müssen, dass die Seitenwandteile und das Dachelement bzw. das Bodenelement in einer quer zur Wirkrichtung der Schwerkraft ausgerichteten Richtung zusammengehalten werden.

Unterstützt werden kann der Zusammenhalt der miteinander jeweils verbundenen Elemente dadurch, dass mindestens an den dachseitigen Längsrändern der den Längsseiten des Kofferaufbaus zugeordneten Seitenwandelementen und den ihnen zugeordneten Rändern des Dachelements jeweils Absätze ausgebildet sind, die so zueinander korrespondierend geformt sind, dass das Dachelement im fertig montierten Zustand formschlüssig zwischen den betreffenden Seitenwandelementen gehalten und auf ihnen abgestützt ist.

In entsprechender Weise können an den dem Bodenelement zugeordneten Längsrändern der den Längsseiten zugeordneten Seitenwandelemente Absätze ausgebildet sein, über die die betreffenden Seitenwandelemente jeweils auf einem korrespondierend geformten Absatz des Bodenelements sitzen.

In der Praxis kann die Materialaussparung durch jeweils eine Abschrägung gebildet sein, die sich jeweils entlang der einander zugeordneten Ränder von Bodenelement, Seitenwandelementen und Dachelement erstreckt.

Insbesondere dann, wenn das Dachelement oder das Bodenelement über entsprechende Absätze in der voranstehend beschriebenen Weise formschlüssig mit den Seitenwänden verbunden sind, kann es dabei zweckmäßig sein, wenn das im Bereich der Materialaussparung ausgesparte Material zum einen Teil dem einen und zum anderen Teil dem anderen der in der jeweiligen Fügezone aufeinander stoßenden Elemente (Bodenelement, Seitenwandelemente und/oder Dachelement) fehlt.

Dabei ergibt sich eine von der Dicke der jeweils miteinander verbundenen Elemente unabhängige Gestaltung der Fügezonen, dass das im Bereich der Materialaussparung ausgesparte Material zu gleichen Teilen den in der jeweiligen Fügezone aufeinander stoßenden Elementen (Bodenelement, Seitenwandelemente und/oder Dachelement) fehlt. Eine solche gleichmäßige Aufteilung kann dadurch hergestellt werden, dass unabhängig von ihrer Gesamtdicke an dem Dachelement und den Seitenwandelementen in ihren aufeinander stoßenden Randbereichen jeweils ein Absatz so eingeformt wird, dass an den aufeinander stoßenden Elementen jeweils gegenüber dem Hauptkörper des jeweiligen Elements vorstehende Randabschnitte von jeweils gleicher Dicke ausgebildet sind. Diese Randabschnitte stoßen in der Fügezone aufeinander und bilden zu gleichen Teilen die äußere Begrenzung der Materialaussparung.

Wie bereits erwähnt, erweist sich die erfindungsgemäße Art und Weise der Verbindung bei Kofferaufbauten, bei denen die Seitenwandelemente und das Dachelement als Sandwichkonstruktion mit zwei Außenlagen, die aus Metallblech bestehen, und einer zwischen die Außenlagen gefüllten Schaumfüllung ausgebildet sind. Eine besonders hohe Produktivität bei der Herstellung des Kofferaufbaus kann bei der Erzeugung der Seitenwand- und Dachelemente dadurch gesichert werden, dass die für die Falzverbindungen benötigten Anschlussbleche bereits bei der Herstellung der Seitenwand-, Dach- oder Bodenelemente mit einer der Außenlagen verbunden werden und erst darauf folgenden die Schaumfüllung in den von den Außenlagen begrenzten Raum gegeben wird. Kennzeichnend für diese Art der Herstellung ist dann, dass bei den fertigen Seitenwand- oder Dachelementen die Anschlussbleche mit Schaum der Schaumfüllung benetzt sind. Auf diese Weise können auch Wärmebrücken oder Hohlräume, in denen es zur Bildung von Kondenswasser kommen könnte, auf besonders effektive Weise verhindert werden. Eine optisch besonders ansprechende und gleichzeitig besonders einfach herstellbare Variante der erfindungsgemäßen Verbindung der Seitenwandelemente mit dem Boden- und Dachelement ist **dadurch gekennzeichnet, dass** die Seitenwandelemente jeweils eine ebene Außenfläche aufweisen und die ihnen zugeordneten Falzverbindungen jeweils einen Schenkel besitzen, dessen Außenfläche sich in der Verlängerung der jeweiligen Außenfläche des jeweiligen Seitenwandelements erstreckt.

Ein Eindringen von Feuchtigkeit in die Falzverbindungen kann dadurch verhindert werden, dass der zwischen der jeweiligen Falzverbindung und dem Dachelement oder der zwischen der jeweiligen Falzverbindung und dem Bodenelement verbleibende Raum jeweils mit einem Dichtstoff gefüllt ist.

Nachfolgend wird die Erfindung anhand einer ein Ausführungsbeispiel darstellenden Zeichnung erläutert. Es zeigen jeweils schematisch:

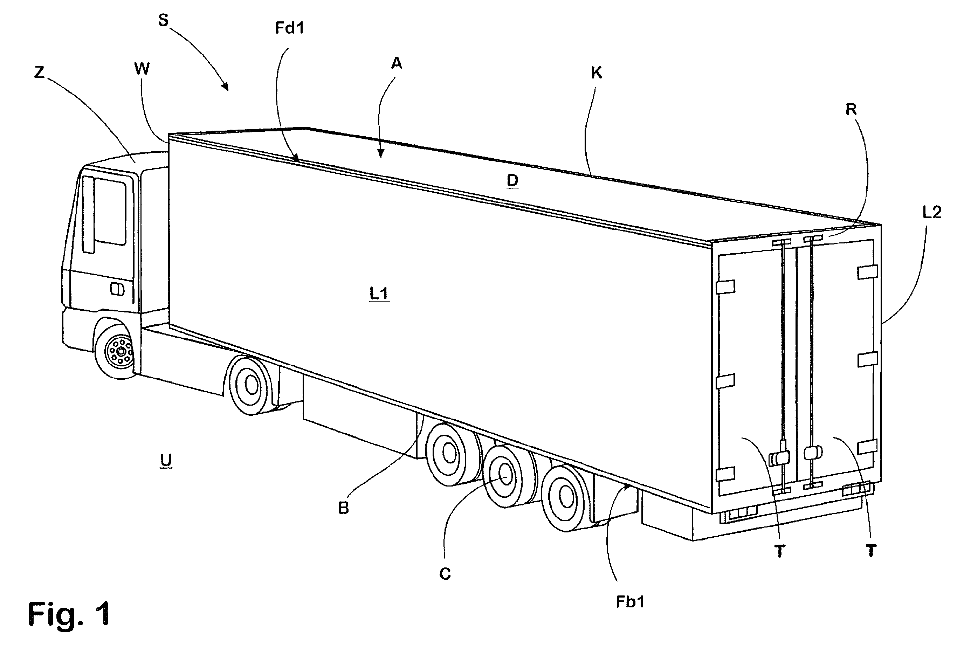

- Fig. 1: einen Sattelzug in einer perspektivischen Ansicht;

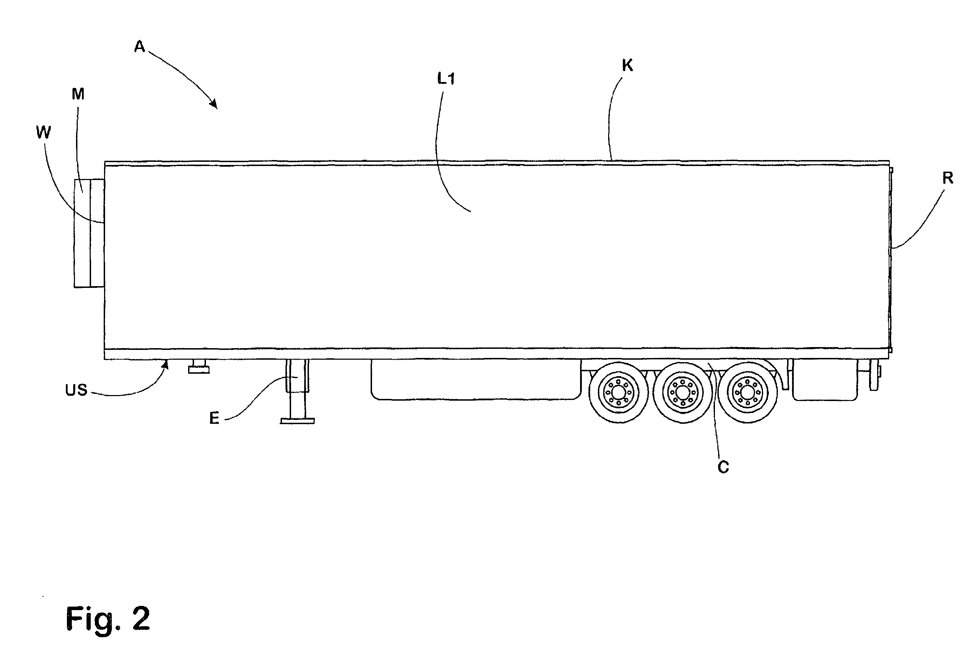

- Fig. 2: den Sattelauflieger des in Fig. 1 dargestellten Sattelzugs in einer seitlichen Ansicht;
- Fig. 3: den Sattelauflieger des in Fig. 1 dargestellten Sattelzugs in einer Explosionsansicht;
- Fig. 4: den Anschluss eines Seitenwandelements mit dem Dachelements des Sattelaufliegers in einer perspektivischen, quergeschnittenen Ansicht;

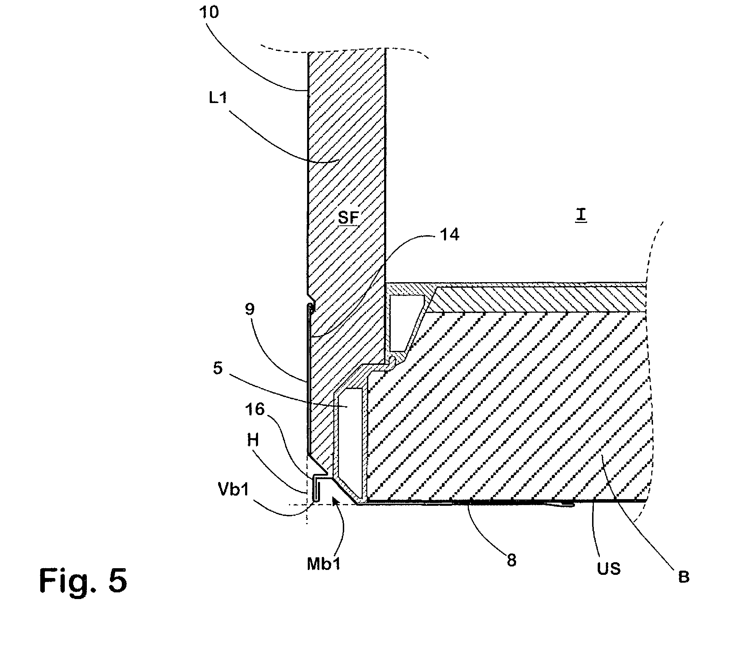

- Fig. 5: den Bereich des Anschlusses zwischen dem Bodenelement und einem Seitenwandelement des Sattelaufliegers in einem Querschnitt.

Beim hier beschriebenen Beispiel besteht der als Kühltransporter ausgelegte Sattelzug S in an stich bekannter Art aus einer Zugmaschine Z und einem Sattelauflieger A.

Der Sattelauflieger A umfasst einen Kofferaufbau K, der auf einem Fahrwerkschassis C montiert ist. Der Kofferaufbau K isoliert den von ihm umgebenen Innenraum I gegen die Wärme der Umgebung U. Dabei ist der Kofferaufbau K aus einem Bodenelement B, einem Dachelement D sowie den Seitenwandelementen L1,L2 und W zusammengesetzt.

Von den Seitenwandelementen L1,L2,W bilden die Seitenwandelemente L1,L2 die Längsseitenwände und das Seitenwandelement W die Stirnwand des Kofferaufbaus K. An dem als Stirnwand dienenden Seitenwandelement W kann ein Kühlgerät M montiert sein, das den Innenraum I des Kofferaufbau K mit gekühlter Luft versorgt. Mit dem Bodenelement B ist neben dem Fahrwerkschassis C auch eine Stützwinde E verbunden, die zum Abstützen des Sattelaufliegers A im von der Zugmaschine Z abgekoppelten Zustand dient.

Zusätzlich umfasst der Kofferaufbau K eine Rückwand R, in der die Türen T vorgesehen sind, über die der Innenraum I des Kofferaufbaus K beladen und entladen wird. Grundsätzlich wäre es denkbar, auch die Rückwand als Seitenwandelement auszubilden und dieses in der hier für Seitenwandelemente L1,L2 und W beschriebenen Weise mit dem Bodenelement B oder dem Dachelement D zu verbinden. Vorliegend soll jedoch die Rückwand R als separates Teil betrachtet werden, das in anderer Weise hergestellt und angeordnet wird.

Beim nachfolgend beschriebenen Ausführungsbeispiel ist zur Verdeutlichung der durch die Erfindung eröffneten Möglichkeiten davon ausgegangen worden, dass sowohl die die beiden Längsseitenwände bildenden Seitenwandelemente L1,L2 als auch das die Stirnwand bildende Seitenwandelement W in der erfindungsgemäßen Weise mit dem Dachelement D und dem Bodenelement B verbunden werden.

Abhängig von anderen Randbedingungen beim Zusammenbau des Kofferaufbaus kann es jedoch zweckmäßiger sein, die Stirnwand W in anderer Weise an den Grundkörper anzubinden, der aus den in erfindungsgemäßer Weise miteinander verbundenen Dachelement D, Bodenelement B und Seitenwandelementen L1,L2 gebildet wird. Dies kann beispielsweise dann erforderlich sein, wenn im Bereich der Stirnwand Längentoleranzen der einzelnen dort zusammentreffenden Bauteile ausgeglichen werden müssen.

Beim vorliegend beschriebenen Ausführungsbeispiel ist jedoch zwischen den Seitenwandelementen L1,L2,W und dem Bodenelement B jeweils eine Fügezone Fb1,Fb2,Fb3 gebildet, in der das Bodenelement B und das jeweilige Seitenwandelement L1,L2,W aufeinander stoßen.

In entsprechender Weise ist zwischen den Seitenwandelementen L1,L2,W und dem Dachelement D jeweils eine weitere Fügezone Fd1,Fd2,Fd3 vorhanden, in der das Dachelement D und das jeweilige Seitenwandelement L1,L2,W aneinander anliegen.

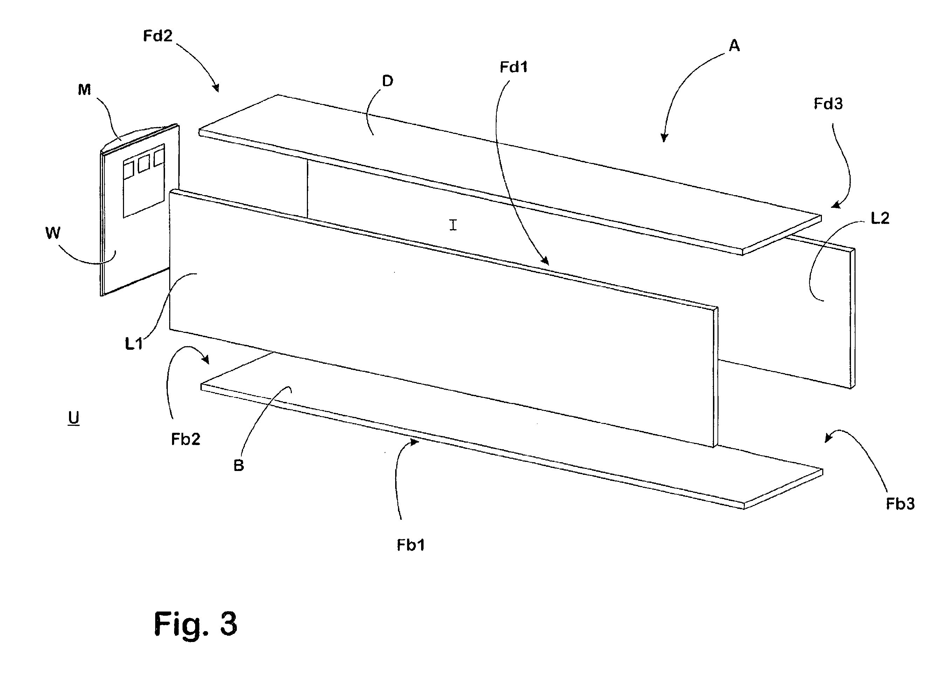

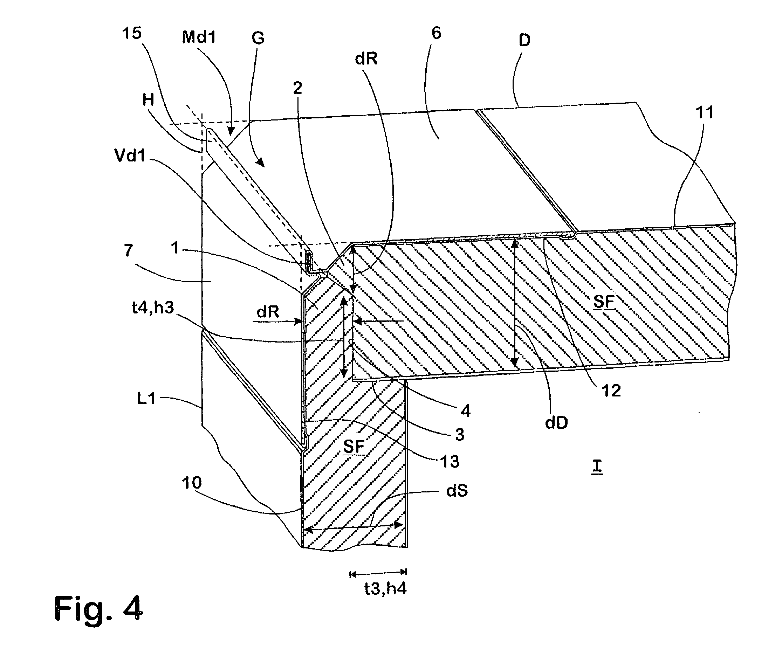

Wie anhand der Figuren 3 und 4 am Beispiel der Fügezonen Fd1 und Fb1 dargestellt, sind im Bereich der Fügezonen Fb1,Fb2,Fb3;Fd1,Fd2,Fd3 jeweils Materialaussparangen Md1,Mb1 vorgesehen, durch die in den dem Bodenelement B und dem Dachelement D zugeordneten Kantenbereichen der in den Figuren 3 und 4 durch gestrichelte Linien angedeuteten quaderförmigen Umhüllenden H des Kofferaufbaus K Freiräume geschaffen worden sind für jeweils eine Falzverbindung Vb1,Vd1.

Im Bereich der dem Dachelement D zugeordneten Fügezone Fd1,Fd2,Fd3 ist die Materialaussparung jeweils dadurch gebildet, dass an dem Dachelement D der der jeweiligen Fügezone Fd1,Fd2,Fd3 zugeordnete Kantenbereich fehlt, indem dort eine in einem Winkel von etwa 45° verlaufende Abschrägung G vorgesehen ist. Genauso fehlt auch der der jeweiligen Fügezone Fd1,Pd2,Fd3 zugeordnete Kantenbereich des jeweiligen Seitenwandelements L1,L2,W, indem auch dieser Kantenbereich unter einem Winkel von etwa 45° abgeschrägt ist.

Die Abschrägungen G des jeweiligen Seitenwandelements L1,L2,W und des Dachelements D begrenzen so kofferseitig die Materialaussparung Md1, in der die jeweilige Falzverbindung Vd1,Vd2,Vd3 angeordnet ist.

Die Abschrägungen G sind dabei an den freien Enden von Randabschnitten 1,2 ausgebildet, die an den einander jeweils zugeordneten Rändern des Dachelements D und der Seitenwandelemente L1,L2,W vorhanden sind. Dazu ist in den jeweiligen Randbereich jeweils ein Absatz 3,4 eingeformt, dessen Tiefe t3,t4 und Höhe h3,h4 so bemessen sind, dass die Dicke dR aller Randabschnitte 1,2 unabhängig von der Dicke dD des jeweiligen Dachelements D und der Dicke dS des jeweiligen Seitenelements gleich ist. Ein luftspaltfreier formschlüssiger Sitz des Dachelements D auf den Seitenelementen L1,L2,W ergibt sich dabei dadurch, dass die Tiefe t3 des Absatzes 3 des jeweiligen Seitenwandelements L1,L2,W gleich der Höhe h4 des Absatzes 4 des Dachelements D und die Tiefe t4 des Absatzes 4 des Dachelements gleich der Höhe h3 des Absatzes 3 des jeweiligen Seitenwandelements L1,L2,W ist. Der formschlüssige Sitz des Dachelements D auf den Seitenwandelementen L1,L2,W wird dabei dadurch unterstützt, dass die Stoßflächen, an denen die Randabschnitte 1,2 mit ihren freien Stirnseiten aneinander stoßen, korrespondierend zueinander unter einem Winkel von 45° angeschrägt sind.

Mit ihren unteren Randbereichen sind die Seitenwandelemente L1,L2,W auf dem ihnen zugeordneten Randbereich des Bodenelements B abgestützt. Die den Längsseiten des Bodenelements B zugeordneten Seitenwandelemente L1,L2 stehen dabei jeweils auf einem sich über die Länge des Bodenelements B erstreckenden Längsprofil 5. Dazu ist auf der Innenseite der betreffenden Seitenwandelemente L1,L2 ein Absatz eingeformt, dessen Form so gewählt ist, dass das jeweilige Seitenwandelement L1,L2 formschlüssig dicht auf dem jeweiligen Längsprofil 5 sitzt und es seitlich gegenüber der Umgebung abdeckt. Die Materialaussparung Mb1 im Bereich der Fügezonen Fb1,Fb2,Fb3 ist dabei dadurch gebildet, dass der untere äußere Längskantenbereich der Seitenwandelemente L1,L2 unter einem Winkel von 45° angeschrägt ist, so dass dort eine schräg in Richtung der Unterseite US des Bodenelements B verlaufende Fläche gebildet ist. Diese Fläche geht in einen entsprechend schräg verlaufenden Abschnitt des jeweiligen Längsprofils 5 über, wobei die Dicke der Längsprofile 5 etwa der Hälfte der Dicke dS der Seitenwandelemente L1,L2 entspricht. Dementsprechend tragen auch im Bereich der Materialaussparung Mb1 fehlenden Volumina des Bodenelements B und das jeweilige Seitenwandelement L1,L2 zu gleichen Teilen zu dem im Bereich der Materialaussparung Mb1 vorhandenen Raum bei.

Die Falzverbindungen Vb1,Vd1 sind jeweils aus einem Anschlussblech 6,7,8,9 geformt, das an dem jeweiligen Seitenwandelement L1,L2,W bzw. dem Dachelement D und dem Bodenelement B befestigt ist. Die Anschlussbleche 6,7,8,9 sind dabei bereits während der Herstellung der Seitenwandelemente L1,L2,W, des Dachelements D und des Bodenelements B an dem betreffenden Element L1,L2,W,B,D angebracht worden.

Bei der Herstellung der als Sandwichbauteile gefertigten Seitenwandelementen L1,L2,W und des ebenfalls als Sandwich ausgebildeten Dachelements D ist dazu das jeweilige Anschlussblech 6,7,9 im jeweiligen Randbereich mit der Außenseite der der Umgebung U zugeordneten Außenlage 10,11 des jeweiligen Seitenwandelements L1,L2,W bzw. Dachelements D verklebt worden. Dabei war bereits in dem betreffenden Randbereich der jeweiligen Außenlage 10,11 eine Einformung 12,13,14 ausgebildet, deren Tiefe unter Berücksichtigung der Dicke des jeweiligen Anschlussblechs 6,7,9 und der erforderlichen Kleberschicht so bemessen war, dass die freiliegende Außenfläche des Anschlussblechs 6,7,9 jeweils im Wesentlichen flächenbündig zur ebenen Außenfläche des jeweiligen Seitenwandelements L1,L2,W bzw. Dachelements D ausgerichtet ist. Anschließend erfolgte das Ausschäumen des jeweiligen Seitenwandelements L1,L2,W bzw. Dachelements D mit der Schaumfüllung SF. Der Schaum gelangte dabei bis zum jeweiligen Anschlusselement 6,7,9, so dass auch dieses auf seiner der Innenseite des jeweiligen Elements L1,L2,W,D zugeordneten Seite mit Schaum der Schaumfüllung SF benetzt worden ist.

Beim Bodenelement B ist das Anschlussblech 8 lediglich auf dessen ebene Unterseite US aufgelegt und dort ebenfalls verklebt worden.

Die Anschlussbleche 6,7,8,9 sind jeweils so angeordnet, dass sie mit ihrem einen Randbereich frei über das jeweilige Seitenwandelement L1,L2,W bzw. das Bodenelement B und das Dachelement D hinausstehen.

Die dem Bodenelement B und dem Dachelement D zugeordneten und Bodenelement B angeordneten Anschlusselemente 6,8 weisen dabei jeweils eine Abkröpfung auf, die dicht an der Schrägfläche G des Randabschnitts 2 (Anschlusselement 6) bzw. der Schrägfläche des Längsprofils 5 (Anschlusselement 8) anliegt. Von dem abgekröpften Abschnitt der Anschlusselemente 6,8 geht ein weiterer Abschnitt ab, der sich im Wesentlichen parallel zur Außenfläche des Dachelements D (Anschlusselement 6) bzw. zur Unterseite US des Bodenelements B (Anschlusselement 8) erstreckt. Dieser Abschnitt geht wiederum in einem unter einem rechten Winkel von ihm in Richtung der Umgebung U abstehenden Schlussabschnitt über.

Die den Seitenwandelementen L1,L2,W zugeordneten Anschlusselemente 7,9 weisen ebenfalls einen ersten, gegenüber ihrem in der Einformung des Seitenwandelements L1,L2,W liegenden Abschnitt auf, der an der die jeweilige Materialaussparung Md1,Mb1 begrenzenden Schrägfläche des jeweiligen Seitenwandelements L1,L2,W anliegt. Daran angeschlossen ist ein zweiter Abschnitt, der im Wesentlichen rechtwinklig zur Außenfläche des Seitenwandelements L1,L2,W in Richtung der Umgebung U gerichtet ist. An diesen Abschnitt schließt sich ein Schlussabschnitt an, der mittels einer hier nicht dargestellten Bördel- oder Rollmaschine flach anliegend um den jeweiligen Schlussabschnitt des jeweils zugeordneten Anschlusselements 6,8 gelegt ist.

Die Längen der die Falzverbindungen Vd1,Vd2,Vd3;Vb1,Vb2,Vb3 bildenden Abschnitte der Anschlussbleche sind dabei so gewählt, dass die Falzverbindungen Vd1,Vd2,Vd3;Vb1,Vb2,Vb3 insgesamt nicht aus der Umhüllenden H des Kofferaufbaus K hinausragen. Dabei weisen die Falzverbindungen Vd1,Vd2,Vd3;Vb1,Vb2,Vb3 jeweils einen Schenkel 15,16 auf, dessen Außenseite sich im Wesentlichen flächenbündig zu der Außenseite des jeweiligen Seitenelements L1,L2,W erstreckt.

Der zwischen dem jeweiligen Schenkel 15,16 und dem Dachelement D bzw. Bodenelement B verbleibende Raum kann mit einer Dichtmasse gefüllt sein, um ein Eindringen von Feuchtigkeit in die jeweilige Falzverbindung Vd1,Vd2,Vd3;Vb1,Vb2,Vb3 zu verhindern.

### BEZUGSZEICHEN

- 1,2: Randabschnitte
- 3,4: Absätze
- 5: Längsprofil
- 6,7,8,9: Anschlussbleche
- 10,11: Außenlagen
- 12,13,14: Einformungen
- 15,16: Schenkel
- A: Sattelauflieger
- B: Bodenelement
- C: Fahrwerkschassis
- D: Dachelement
- dD: Dicke des Dachelements D
- dR: Dicke der Randabschnitte 1,2
- dS: Dicke des Seitenwandelements L1
- E: Stützwinde
- Fb1,Fb2,Fb3: Fügezonen zwischen dem Bodenelement B und den Seitenwandelementen L1,L2,W
- Fd1,Fd2,Fd3: Fügezone zwischen dem Dachelement D und den Seitenwandelementen L1,L2,W
- G: Abschrägung
- H: Umhüllenden
- h3,h4: Höhe der Absätze 3,4
- I: Innenraum
- K: Kofferaufbau
- L1,L2,W: Seitenwandelemente
- M: Kühlgerät
- Mb1,Md1: Materialaussparungen
- S: Sattelzug
- SF: Schaumfüllung
- T: Türen
- t3,t4: Tiefe der Absätze 3,4
- U: Umgebung
- Vb1,Vd1: Falzverbindungen
- Z: Zugmaschine

## Patentansprüche

1. Kofferaufbau für ein Fahrzeug, wie einen Lastkraftwagen, Anhänger oder Sattelauflieger (A), mit
a) einem Bodenelement (B),
b) Seitenwandelementen (L1, L2), von denen ein Seitenwandelement (L1) an der einen und das andere Seitenwandelement (L2) an der anderen Längsseite des Bodenelements (B) angeordnet ist, und
c) einem Dachelement (D),
d) wobei zwischen den Seitenwandelementen (L1, L2) und dem Bodenelement (B) jeweils eine Fügezone (Fb1-Fb3) in der das Bodenelement (B) und das jeweilige Seitenwandelement (L1,L2) aufeinander stoßen und durch eine auf der Außenseite des Kofferaufbaus (K) angeordnete Falzverbindung (Vb1-Vb3) miteinander verbunden sind, und zwischen den Seitenwandelementen (L1, L2) und dem Dachelement (D) jeweils eine weitere Fügezone (Fd1-Fd3) vorhanden ist, in der das Dachelement (D) und das jeweilige Seitenwandelement (L1,L2) aufeinanderstoßen und ebenfalls durch eine auf der Außenseite des Kofferaufbaus (K) angeordnete Falzverbindung (Vd1-Vd3) miteinander verbunden sind, und
e) wobei die Falzverbindungen (Vd1-Vd3;Vb1-Vb3) jeweils aus zwei von den dort miteinander verbundenen Elementen (Seitenwandelemente L1, L2; Bodenelement B, und Dachelement D) abstehenden Anschlussblechen (6,7,8,9) gebildet sind, die auf die Außenseite der miteinander verbundenen Elemente (L1,L2,W,B,D) aufgesetzt sind,
**dadurch gekennzeichnet,**
f) **dass** der Kofferaufbau (K) im Bereich der Fügezonen (Fd1-Fd3; Fb1-Fb3) jeweils eine sich über die jeweilige Fügezone (Fd1-Fd3;Fb1-Fb3) erstreckende Materialaussparung (Md1, Mb1) aufweist, so dass innerhalb der quaderförmigen Umhüllenden (H) des Kofferaufbaus (K) ein entlang des Dachelements (D) verlaufender erster Raum, in dem die jeweilige Falzverbindung (Vd1-Vd3) zwischen dem Dachelement (D) und den Seitenwandelementen (L1,L2) angeordnet ist, und ein entlang des Bodenelements (B) verlaufender zweiter Raum gebildet sind, in dem die jeweilige Falzverbindung (Vb1-Vb3) zwischen dem Bodenelement (B) und den Seitenwandelementen (L1,L2,W) angeordnet ist,
g) **dass** mindestens die Seitenwandelemente (L1,L2,W) in ihren den Fügezonen (Fd1-Fd3;Fb1-Fd3) zugeordneten Randbereichen jeweils eine sich über die Fügezone (Fd1-Fd3;Fb1-Fd3) erstreckende Einformung (12,13,14) aufweisen, in der die Anschlussbleche (6,7,8,9) mit ihrem das jeweilige Seitenwandelement (L1,L2,W) überdeckenden Bereich liegen und
h) **dass** die Tiefe der jeweiligen Einformung (12, 13, 14) mindestens gleich der kleinsten Dicke des jeweils in ihr liegenden Anschlussblechs (6,7,8,9) ist.

2. Kofferaufbau nach Anspruch 1, **dadurch gekennzeichnet, dass** zu den Seitenwandelementen neben den den Längsseiten des Kofferaufbaus (K) zugeordneten Seitenwandelementen (L1, L2) ein Seitenwandelement (W) gehört, das an der Stirnseite des Kofferaufbaus (K) angeordnet ist.

3. Kofferaufbau nach einem der voranstehenden Ansprüche, **dadurch gekennzeichnet, dass** die Umhüllende (H) des Kofferaufbaus (K) einen Quader bildet.

4. Kofferaufbau nach einem der voranstehenden Ansprüche, **dadurch gekennzeichnet, dass** die Seitenwandelemente (L1,L2,W) jeweils auf einem Randbereich des Bodenelements (B) abgestützt sind und **dass** das Dachelement (D) auf den Seitenwandelementen (L1,L2,W) aufliegt.

5. Kofferaufbau nach einem der voranstehenden Ansprüche, **dadurch gekennzeichnet, dass** mindestens an den dachseitigen Längsrändern der den Längsseiten des Kofferaufbaus (K) zugeordneten Seitenwandelemente (L1,L2) und den ihnen zugeordneten Rändern des Dachelements (D) jeweils Absätze (1,2) ausgebildet sind, die so zueinander korrespondierend geformt sind, dass das Dachelement (D) im fertig montierten Zustand formschlüssig zwischen den betreffenden Seitenwandelementen (L1, L2) gehalten und auf ihnen abgestützt ist.

6. Kofferaufbau nach einem der voranstehenden Ansprüche, **dadurch gekennzeichnet, dass** an den dem Bodenelement (B) zugeordneten Längsrändern der den Längsseiten zugeordneten Seitenwandelementen (L1,L2,W) Absätze ausgebildet sind, über die die betreffenden Seitenwandelemente (L1,L2,W) jeweils auf einem korrespondierend geformten Absatz des Bodenelements (B) sitzen.

7. Kofferaufbau nach einem der voranstehenden Ansprüche, **dadurch gekennzeichnet, dass** die Materialaussparungen (Md1, Mb1) durch jeweils eine Abschrägung (G) gebildet sind, die sich jeweils entlang der einander zugeordneten Ränder von Bodenelement (B), Seitenwandelementen (L1,L2,W) und Dachelement (D) erstreckt.

8. Kofferaufbau nach einem der voranstehenden Ansprüche, **dadurch gekennzeichnet, dass** das im Bereich der Materialaussparung (Md1, Mb1) ausgesparte Material zum einen Teil dem einen und zum anderen Teil dem anderen der in der jeweiligen Fügezone aufeinander stoßenden Elementen (Bodenelement (B), Seitenwandelemente (L1, L2, W) und/oder Dachelement (D)) fehlt.

9. Kofferaufbau nach Anspruch 8, **dadurch gekennzeichnet, dass** das im Bereich der Materialaussparung ausgesparte Material zu gleichen Teilen den in der jeweiligen Fügezone aufeinander stoßenden Elementen (Bodenelement (B), Seitenwandelemente (L1,L2,W) und/oder Dachelement (D)) fehlt.

10. Kofferaufbau nach einem der voranstehenden Ansprüche, **dadurch gekennzeichnet, dass** das Dachelement (D) in seinen den Fügezonen (Fd1-Fd3) jeweils zugeordneten Randbereichen jeweils eine sich über die jeweilige Fügezone (Fd1-Fd3) erstreckende Einformung (12) aufweist, in der das der betreffenden Fügezone (Fd1-Fd3) jeweils zugeordnete Anschlussblech (6) mit seinem das Dachelement (D) überdeckenden Bereich liegt.

11. Kofferaufbau nach Anspruch 10, **dadurch gekennzeichnet, dass** die Tiefe der jeweiligen Einformung (12, 13, 14) mindestens gleich der Dicke des in ihr liegenden Anschlussblechs (6, 7, 8, 9) ist.

12. Kofferaufbau nach einem der voranstehenden Ansprüche, **dadurch gekennzeichnet, dass** die Seitenwandelemente (L1,L2,W) und das Dachelement (D) als Sandwichkonstruktion mit zwei Außenlagen (10,11), die aus Metallblech bestehen, und einer zwischen die Außenlagen gefüllten Schaumfüllung (SF) ausgebildet sind.

13. Kofferaufbau nach einem der voranstehenden Ansprüche, **dadurch gekennzeichnet, dass** mindestens die den Seitenwandelementen (L1,L2,W) und dem Dachelement (D) zugeordneten Anschlussbleche (6,7,9) mit Schaum der Schaumfüllung (SF) benetzt sind.

14. Kofferaufbau nach einem der voranstehenden Ansprüche, **dadurch gekennzeichnet, dass** die Seitenwandelemente (L1, L2, W) jeweils eine ebene Außenfläche aufweisen und die ihnen zugeordneten Falzverbindungen jeweils einen Schenkel (15, 16) besitzen, dessen Außenfläche sich in der Verlängerung der jeweiligen Außenfläche des jeweiligen Seitenwandelements (L1,L2,W) erstreckt.

15. Kofferaufbau nach einem der voranstehenden Ansprüche, **dadurch gekennzeichnet, dass** der zwischen der jeweiligen Falzverbindung und dem Dachelement (D) oder der zwischen der jeweiligen Falzverbindung und dem Bodenelement (B) verbleibende Raum mit einem Dichtstoff gefüllt ist.

## Claims

1. Box body for a vehicle, such as a lorry, trailer or semitrailer (A), having
a) a base element (B),
b) side wall elements (L1, L2), from which a side wall element (L1) is arranged on one longitudinal side of the base element (B) and the other side wall element (L2) is arranged on the other longitudinal side of the base element (B) and
c) a roof element (D),
d) a joining zone (Fb1-Fb3) in each case between the side wall elements (L1, L2) and the base element (B), in which joining zone the base element (B) and the respective side wall element (L1, L2) impact against each other and are connected to each other by a folded joint (Vb1-Vb3) arranged on the outside of the box body (K), and a further joining zone (Fd1-Fd3) being present in each case between the side wall elements (L1, L2) and the roof element (D), in which joining zone the roof element (D) and the respective side wall element (L1, L2) impact against each other and are likewise connected to each other by a folded joint (Vd1-Vd3 arranged on the outside of the box body (K) and
e) the folded joints (Vd1-Vd3; Vb1-Vb3) each being formed from two connection plates (6, 7, 8, 9) protruding from the elements (side wall elements (L1, L2; base element B and roof element D) connected to each other there, which connection plates are fitted on the outside of the elements (L1, L2, W, B, D) connected to each other,
**characterised,**
f) **in that** in the region of the joining zones (Fd1-Fd3, Fb1-Fb3), the box body (K) has a material recess (Md1, Mb1) extending above the respective joining zone (Fd1-Fd3; Fb1-Fb3) in each case, such that within the cuboid-shaped envelope (H) of the box body (K) a first space running along the roof element (D), in which first space the respective folded joint (Vd1-Vd3) is arranged between the roof element (D) and the side wall elements (L1, L2), and a second space running along the base element (B) are formed, in which second space the respective folded joint (Vb1-Vb3) is arranged between the base element (B) and the side wall elements (L1, L2, W),
g) **in that** at least the side wall elements (L1, L2, W) have a moulding (12, 13, 14) extending above the joining zone (Fd1-Fd3; Fb1-Fb3) in each case in their edge regions assigned to the joining zones (Fd1-Fd3; Fb1-Fb3), in which moulding the connection plates (6, 7, 8, 9) lie with their region overlapping the respective side wall element (L1, L2, W) and
h) **in that** the depth of the respective moulding (12, 13, 14) is at least equal to the smallest thickness of the connection plate (6, 7, 8, 9) respectively lying in the latter.

2. Box body according to Claim 1, **characterised in that** in addition to the side wall elements (L1, L2) assigned to the longitudinal sides of the box body (K), a side wall element (W) belongs to the side wall elements, which is arranged on the front end of the box body (K).

3. Box body according to any one of the preceding claims, **characterised in that** the envelope (H) of the box body (K) forms a cuboid.

4. Box body according to any one of the preceding claims, **characterised in that** the side wall elements (L1, L2, W) are each supported on an edge region of the base element (B) and **in that** the roof element (D) rests on the side wall elements (L1, L2, W).

5. Box body according to any one of the preceding claims, **characterised in that** steps (1, 2) are in each case formed at least on the roof-side longitudinal edges of the side wall elements (L1, L2) assigned to the longitudinal sides of the box body (K) and the edges of the roof element (D) assigned to these side wall elements, which steps (1, 2) are formed corresponding to each other in such a way that the roof element (D) is held between the side wall elements concerned (L1, L2) in the finally installed state and supported on them.

6. Box body according to any one of the preceding claims, **characterised in that** steps are formed on the longitudinal edges, assigned to the base element (B), of the side wall elements (L1, L2, W) assigned to the longitudinal sides, above which steps the side wall elements concerned (L1, L2, W) are in each case located on a correspondingly formed step of the base element (B).

7. Box body according to any one of the preceding claims, **characterised in that** the material recesses (Md1, Mb1) are in each case formed by a bevel (G), which extends in each case along the edges of the base element (B), side wall elements (L1, L2, W) and roof element (D) assigned to each other.

8. Box body according to any one of the preceding claims, **characterised in that** the recessed material in the region of the material recess (Md1, Mb1) partly lacks one of and partly lacks another of the elements (base element (B), side wall elements (L1, L2, W) and/or roof element(D)) impacting against each other in the respective joining zone.

9. Box body according to Claim 8, **characterised in that** the recessed material in the region of the material recess lacks in equal parts the elements (base element (B), side wall elements (L1, L2, W) and/or roof element(D)) impacting against each other in the respective joining zone.

10. Box body according to any one of the preceding claims, **characterised in that** the roof element (D) has in each case a moulding (12) extending above the respective joining zone (Fd1-Fd3) in its edge regions assigned to the joining zones (Fd1-Fd3) in each case, in which moulding the connection plate (6) assigned to the joining zone concerned (Fd1-Fd3) in each case lies with its region overlapping the roof element (D).

11. Box body according to Claim 10, **characterised in that** the depth of the respective moulding (12, 13, 14) is at least equal to the thickness of the connection plate (6, 7, 8, 9) lying in the latter.

12. Box body according to any one of the preceding claims, **characterised in that** the side wall elements (L1, L2, W) and the roof element (D) are formed as a sandwich construction with two outer layers (10, 11), which consist of sheet metal, and a foam filling (SF) filled in between the outer layers.

13. Box body according to any one of the preceding claims, **characterised in that** at least the connection plates (6, 7, 9) assigned to the side wall elements (L1, L2, W) and the roof element (D) are wetted with foam from the foam filling (SF).

14. Box body according to any one of the preceding claims, **characterised in that** the side wall elements (L1, L2, W) have in each case a planar outer surface and the folded joints assigned to the them have in each case a leg (15, 16), the outer surface of which extends with the extension of the respective outer surface of the respective side wall element (L1, L2, W).

15. Box body according to any one of the preceding claims, **characterised in that** the space remaining between the respective folded joint and the roof element (D) or between the respective folded joint and the base element (B) is filled with a sealant.

## Revendications

1. Structure de coffre pour un véhicule automobile, comme un camion, une remorque ou une semi-remorque (A), avec
a) un élément de plancher (B),
b) des éléments de parois latérales (L1, L2), un élément de paroi latérale (L1) étant disposé sur un côté longitudinal et l'autre élément de paroi latérale (L2) sur l'autre côté longitudinal de l'élément de plancher (B),
c) un élément de toit (D),
d) sachant que, entre les éléments de parois latérales (L1, L2) et l'élément de plancher (B), il existe une zone de jonction (Fb1 à Fb3), dans laquelle l'élément de plancher (B) et l'élément de paroi latérale (L1, L2) respectif portant l'un contre l'autre et sont reliés ensemble par un agrafage (Vb1 à Vb3), qui est disposé sur le côté extérieur de la structure de coffre (K), et que, entre les éléments de parois latérales (L1, L2) et l'élément de toit (D), il existe une autre zone de jonction (Fd1 à Fd3), dans laquelle l'élément de toit (D) et l'élément de paroi latérale (L1, L2) respectif porte l'un contre l'autre et sont également reliés ensemble par un agrafage (Vd1 à Vd3), qui est disposé sur le côté extérieur de la structure de coffre (K)
e) sachant que les agrafages (Vd1 à Vd3 ; Vb1 à Vb3) sont formés chacun par deux tôles de raccordement (6, 7, 8, 9) en saillie des deux éléments (éléments de parois latérales L1, L2 ; élément de plancher B et élément de toit D), y reliés ensemble, qui sont rapportées sur le côté extérieur des éléments (L1, L2, W, B, D) reliés ensemble,
**caractérisée en ce que**
f) la structure de coffre (K) est dotée, dans chaque région des zones de jonction (Fd1 à Fd3 ; Fb1 à Fb3), d'un évidement (Md1; Mb1), qui s'étend sur la zone de jonction (Fd1 à Fd3 ; Fb1 à Fb3) concernée, de sorte que, à l'intérieur de l'extrémité de l'enveloppe (H) parallélépipédique de la structure de coffre (K), il existe une première chambre, s'étendant le long de l'élément de toit (D), dans laquelle est agencé l'agrafage (Vd1 à Vd3) entre l'élément de toit (D) et les éléments de parois latérales (L1, L2), et une deuxième chambre, s'étendant le long de l'élément de plancher (B), dans laquelle est agencé l'agrafage (Vb1 à Vb3) entre l'élément de plancher (B) et les éléments de parois latérales (L1, L2, W),
g) au moins les éléments de parois latérales (L1, L2, W) sont dotés, dans chacune de leurs zones marginales associées aux zones de jonction (Fd1 à Fd3 ; Fb1 à Fb3), d'une pièce façonnée (12, 13, 14), s'étendant sur la zones de jonction (Fd1 à Fd3 ; Fb1 à Fb3), dans laquelle les tôles de raccordement (6, 7, 8, 9) sont placées avec leur zone recouvrant l'élément de paroi latérale (L1, L2, W) concerné, et
h) la profondeur de chaque pièce façonnée (12, 13, 14) est au moins égale à la plus petite épaisseur de la tôle de raccordement (6, 7, 8, 9) qu'elle contient.

2. Structure de coffre selon la revendication 1, **caractérisée en ce que** fait partie des éléments de parois latérales, en plus des éléments de parois latérales (L1, L2) associés aux côtés longitudinaux de la structure de coffre (K), un élément de paroi latérale (W), qui est agencé sur le côté frontal de la structure de coffre (K).

3. Structure de coffre selon l'une des revendications précédentes, **caractérisée en ce que** l'extrémité de l'enveloppe (H) de la structure de coffre (K) forme un parallélépipède.

4. Structure de coffre selon l'une des revendications précédentes, **caractérisée en ce que** les éléments de parois latérales (L1, L2, W) prennent chacune appui sur une zone marginale de l'élément de plancher (B) et que l'élément de toit (D) est posé sur les éléments de parois latérales (L1, L2, W).

5. Structure de coffre selon l'une des revendications précédentes, **caractérisée en ce que**, tout au moins sur les bords longitudinaux côte toit des éléments de parois latérales (L1, L2) associés aux côtés longitudinaux de la structure de coffre (K) et sur les bords de l'élément de toit (D), qui leur sont associés, sont respectivement formés des talons (1, 2) qui correspondent les uns aux autres de sorte que l'élément de toit (D), à l'état fini monté, est maintenu, par emboîtement, entre les éléments de parois latérales (L1, L2) concernés et prend appui sur eux.

6. Structure de coffre selon l'une des revendications précédentes, **caractérisée en ce que**, sur les bords longitudinaux, côté élément de plancher (B), des éléments de parois latérales (L1, L2, W) associés aux côtés longitudinaux, sont formés des talons par l'intermédiaire desquels les éléments de parois latérales (L1, L2, W) concernés sont posés sur un talon de forme correspondante de l'élément de plancher (B).

7. Structure de coffre selon l'une des revendications précédentes, **caractérisée en ce que** les évidements (Md1, Mb1) sont formés chacun par un chanfrein (G), qui s'étend le long des bords de l'élément de plancher (B), des éléments de parois latérales (L1, L2, W) et de l'élément de toit (D) associés.

8. Structure de coffre selon l'une des revendications précédentes, **caractérisée en ce que**, dans la région des évidements (Md1, Mb1) de la matière enlevée manque, d'une part à l'un et d'autre part à l'autre des éléments (élément de plancher (B), éléments de parois latérales (L1, L2, W) et / ou élément de toit (D)) portant les uns contre les autres dans la zone de jonction.

9. Structure de coffre selon la revendication 8 **caractérisée en ce que**, dans la région de l'évidement, de la matière enlevée manque, en partie égales aux éléments (élément de plancher (B), éléments de parois latérales (L1, L2, W) et / ou élément de toit (D)) portant les uns contre les autres dans la zone de jonction.

10. Structure de coffre selon l'une des revendications précédentes, **caractérisée en ce que** l'élément de toit (D) est doté dans chacune de ses zones de bord respectivement associées aux zones de jonction (Fd1 à Fd3), d'une partie façonnée en creux (12), qui s'étend sur la zone de jonction (Fd1 à Fd3) concernée, dans laquelle la tôle de raccordement (6) respectivement associée à la zone de jonction (Fd1 à Fd3) concernée est logée avec sa zone recouvrant l'élément de toit (D).

11. Structure de coffre selon la revendication 10, **caractérisée en ce que** la profondeur de chaque partie façonnée en creux (12, 13, 14) est au moins égale à l'épaisseur de la tôle de raccordement (6, 7, 8, 9) qu'elle contient.

12. Structure de coffre selon l'une des revendications précédentes, **caractérisée en ce que** les éléments de parois latérales (L1, L2, W) et l'élément de toit (D) sont réalisés en tant que constructions sandwichs avec deux couches extérieures (10, 11), qui consistent en tôle métalliques, et un remplissage de mousse (SF) entre les deux couches extérieures.

13. Structure de coffre selon l'une des revendications précédentes, **caractérisée en ce qu'**au moins les tôles de raccordement (6, 7, 9) associées aux éléments de parois latérales (L1, L2, W) et à l'élément de toit (D) sont humectées de mousse de la charge de mousse (SF).

14. Structure de coffre selon l'une des revendications précédentes, **caractérisée en ce que** les éléments de parois latérales (L1, L2, W) sont dotés chacun d'une surface extérieure plane et que les agrafages, qui leur sont associées, sont dotés chacun d'une aile (15, 16), dont la surface extérieure s'étend en prolongement de la surface extérieure respective de chaque élément de paroi latérale (L1, L2, W).

15. Structure de coffre selon l'une des revendications précédentes, **caractérisée en ce que** l'espace demeurant entre chaque agrafage et l'élément de toit (D) ou entre chaque agrafage et l'élément de plancher (B) est rempli avec une matière d'étanchéité.
